# EUROPEAN PATENT APPLICATION

(11) **EP 1 923 872 A1**
(43) Date of publication of application: **21.05.2008**
(21) Application number: 06023769.0
(22) Date of filing: 15.11.2006
(51) Int. Cl.: G11B 7/013, G11B 7/24, G11B 23/00

(54) **Eco disc**

(71) Applicant: ODS Technology GmbH, 23942 Dassow (DE)
(72) Inventor: Nute, Roger, 49490 Chigné (FR); Fetouhi, Al, 77100 Nanteuil-lès-Meaux (FR)
(74) Representative: Peterreins, Frank

(57) **Abstract**

The present invention relates to DVDs. According to the present invention, the recording layer is at least partially or entirely positioned at a distance T₇ of less than 0.4 mm with respect to the second surface. Therefore, when the optical recording medium of the present invention is clamped in a drive, the recording layer has a "higher" position than a recording layer of a known DVD. The layer structure of the inventive optical recording medium is a key feature of reducing the thickness of the disc in an area of the recording layer. In particular, a thickness T₁ of only 0.4 to 0.7 mm is possible while remaining the reliability of the optical recording medium (i.e. without reading problems in most or all drives). Further, it is achieved that the optical recording medium may have only one substrate, i.e. only one dics of polycarbonate, whereas the other side of the recording layer is only covered by a protective lacquer. With that, manufacturing of the inventive optical recording medium is facilitated and more cost-efficient.

## Description

### Field and background of the invention:

The present invention relates to a recording medium, in particular to an optical recording medium including a substrate and a signal recording layer provided on the substrate.

As one of the conventional recording media for audio, video and/or other information, optical discs such as CDs and DVDs, from which recorded information is read using a light beam or to which information is written using a light beam, are widely used. Since such an optical disc is formed from a single plate-like substrate, it can easily be handled and has a larger storage capacity than other recording media such as magnetic tapes, etc.. Therefore, the optical discs are widely used as media for recording audio and video information, computer-processed data, etc. Recording media for audio, video and/or other information, such as CDs and DVDs are e.g. known from US 5,541,910, US 5,864,534, US 6,002,663, US 6,252,842 and US 2004/00434154 A1.

Information processing units, such as computers, CD/DVD players, digital cameras and video cameras, have been designed more and more compact with an increasingly smaller internal space of installation for a recording and/or reproducing apparatus using an optical recording medium such as an optical disc or the like. Accordingly, optical discs are also known in the prior art, e.g. from US 2004/0228263 A1, which only have a diameter of 65 mm or less.

US 2004/0228263 A1 discloses an optical disc having a thickness of only 0.4 mm to 0.7 mm, i.e. significantly thinner than conventional optical discs which have a thickness of about 1.2 mm. Such optical discs are also called light weight optical discs (LCDs) or thin video discs (TVDs). With this measure it is achieved to reduce the amount of material which is necessary for manufacturing an optical disc and thus to significantly reduce the manufacturing costs. However, in the area around the axis of the optical disc described in US 2004/0228263 A1 - the so called clamping area -, the substrate has a thickness of 1.2 mm, because this distance is prescribed for conventional recording and/or reproducing devices (e.g. drives for computers or CD/DVD players).

At present, a disc must meet the requirements of the "standard physical product" as defined in the Red Book standard, particularly in terms of deflection of the beam incident to the surface of the reflective plan and thus consistency of performance of the disc for the end user. The optical disc disclosed in US 2004/0228263 A1 has the drawback that in many cases the shape of the recording area is not within the prescribed tolerances. As a result, this optical disc is not a reliable recording medium for all types of disc cartridges e.g. for computers, CD/DVD players, digital cameras and video cameras, in particular because the disc cartridges of the various manufacturers are not completely standardized.

### Objects and summary of the invention:

It is an object of the present invention to provide a novel light weight optical recording medium which has an increased reliability. Problems relating to playability should be reduced or avoided.

This object is achieved by an optical recording medium as defined in claims 1, 2, 8, 9, 13 and 14. The dependent claims depict advantageous embodiments of the invention.

The present invention is directed to an optical recording medium comprising a substrate and at least one recording layer for storing data, wherein the structure of the recording layer is formed such that the data can be read using a light having a wavelength of 650 nm ± 50 nm. Such a wavelength is used for reading DVDs, whereas CDs can only be read with a wavelength of 780 nm. From a structural point of view, the structure of the recording layer has pits and lands with a height difference of 650nm / 4 ± 10%. Due to the reflection at the pits and lands, there is a phase difference of λ/2 which results in interference effects so that the photo detectors of the reading device can read the optical recording medium.

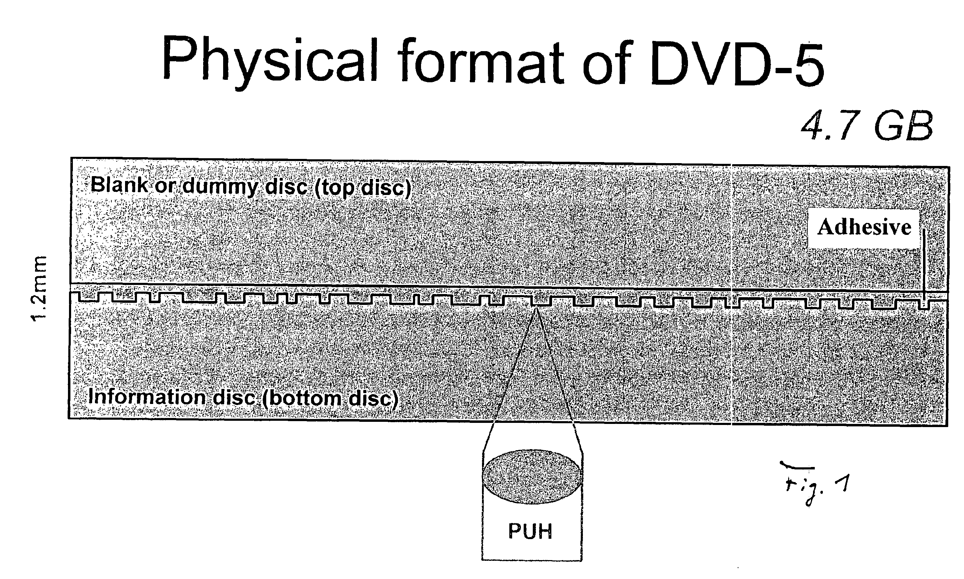

The present invention can be defined in various ways wherein all definitions are linked by the same inventive concept:
According to one aspect of the present invention, the recording layer is at least partially or entirely positioned at a distance T₇ of less than 0.4 mm with respect to the second surface. In particular, the recording layer may be positioned at a distance T₇ of less than 0.3 mm with respect to the second surface. The (upper) second surface is usually covered by a printing layer so that the optical recording medium is designed to be read with a laser which is positioned on the side of the (lower) first surface of the optical recording medium. With that, the optical recording medium of the present invention is a DVD has the layer structure like a known CD as will be explained in more detail in context with Figs. 1 to 7. The inventive DVD thus has a recording layer which is very closely positioned to the (upper) second surface, whereas the recording layer of known DVDs is in the middle of recording medium (sandwiched between to discs of polycarbonate). Therefore, when the optical recording medium of the present invention is clamped in a drive, the recording layer has a "higher" position than a recording layer of a known DVD.

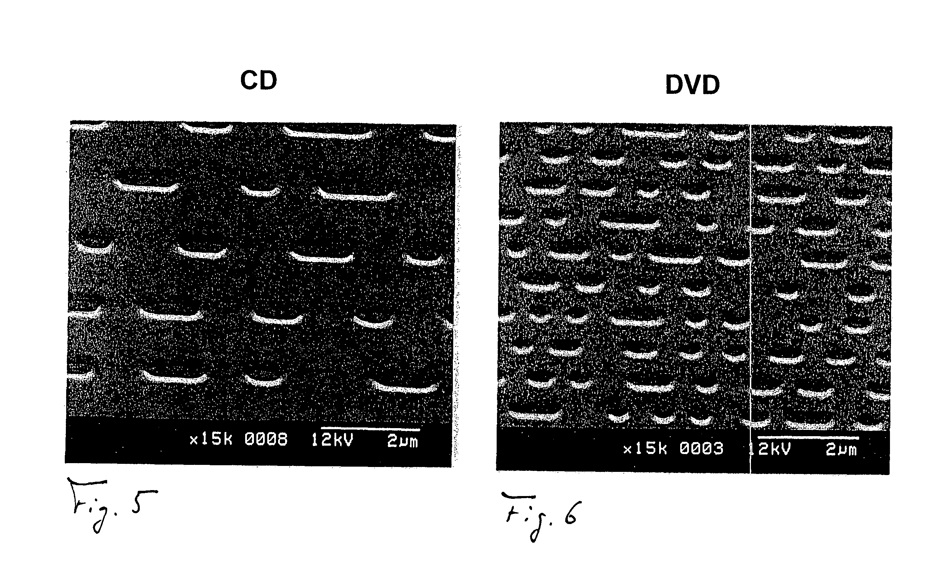

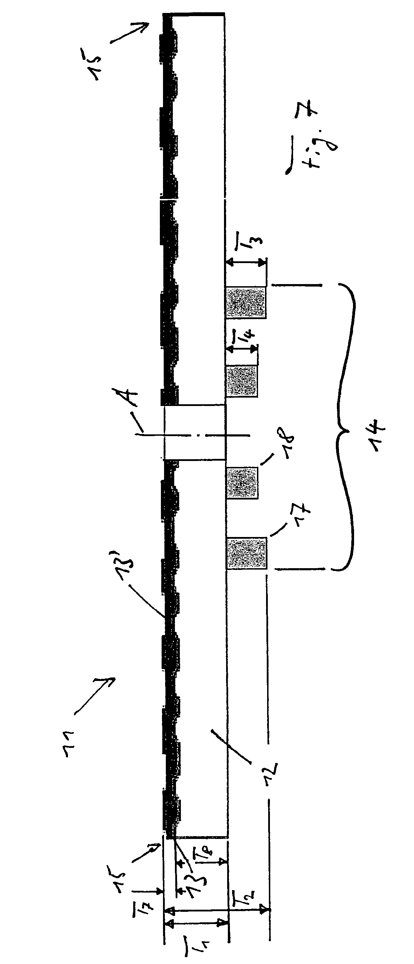

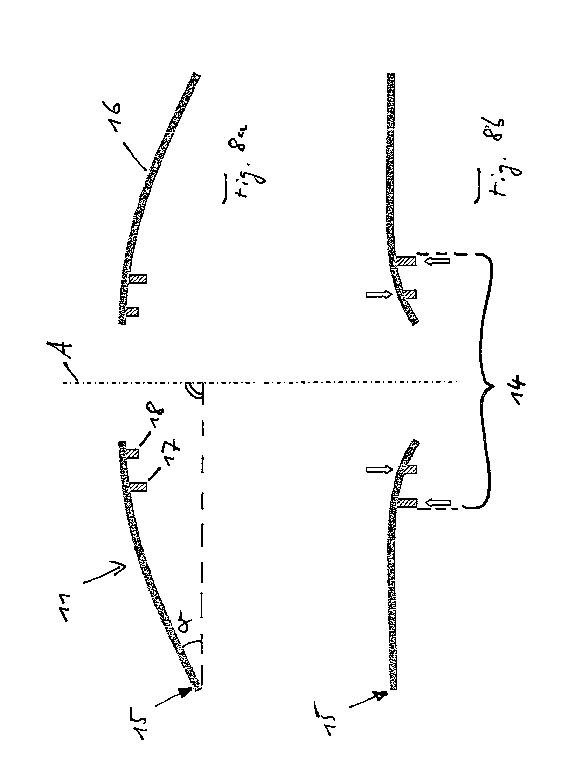

Providing a DVD having a layer structure of a CD is not yet known in the prior art. In particular, many DVD drives are only designed to read DVDs having a recording layer in the middle of the disc. However, the inventive recording medium can be read with a drive which is suitable for reading DVDs and CDs, because such drives have a height adjustable reading means. As a result, the layer structure of the inventive optical recording medium is a key feature of reducing the thickness of the disc in an area of the recording layer. In particular, a thickness T₁ of only 0.4 to 0.7 mm is possible (see Fig. 7) while remaining the reliability of the optical recording medium (i.e. without reading problems in most or all drives). Further, it is achieved that the optical recording medium may have only one substrate, i.e. only one dics of polycarbonate, whereas the other side of the recording layer is only covered by a protective lacquer. With that, manufacturing of the inventive optical recording medium is facilitated and more cost-efficient.

According to a second aspect of the present invention, the recording layer is at least partially positioned at a distance T₅ of more than 0.9 mm from a plane defined by a surface of a clamping area of the optical recording medium. The clamping area preferably defines the maximum thickness T₂ of the optical recording medium, wherein there is a height difference between lowest surface of the clamping area and the (lower) first surface of the optical recording medium. Therefore, the mentioned plane is a virtual plane below the first surface which is perpendicular to the axis A of the optical recording medium, and which is further defined by the lowest point(s) or lowest surface of the clamping area of the optical recording medium. As a result, the recording layer is arranged at a higher position (namely more than 0.9 mm with respect to the lowest surface of the clamping area) when the optical recording medium is clamped in a drive, whereas the recording layer of a known DVD is arranged at a position of about 0.6 mm with respect to the lowest surface of the clamping area.

According to a third aspect of the present invention, the optical recording medium has a clamping area with a thickness T₂ which is greater than the distance T₁ between the first surface and the second surface, wherein the recording layer is at least partially or entirely positioned at a distance T₈ of more than 0.4 mm from the first surface. Preferably, the increased thickness of the clamping area results in that the position of the recording layer is at a height of more than 0.9 mm with respect to the lowest surface of the clamping area.

### Brief description of the drawings:

- Fig. 1: shows a partial cross-sectional view of a known DVD-5;
- Fig. 2: shows a partial cross-sectional view of a known DVD-9;
- Fig. 3: shows a partial cross-sectional view of a known DVD-10;
- Fig. 4: shows a partial cross-sectional view of a known CD;
- Figs. 5: and 6 show microscope pictures of a recording layer of a CD and of a DVD, respectively;
- Fig. 7: shows a cross-sectional view of an optical recording medium according to a first embodiment of the present invention;
- Figs. 8a and 8b: show a cross-sectional view of the optical recording medium according to a second embodiment of the present invention in its unclamped and its clamped state;
- Figs. 9a and 9b: show a cross-sectional view of the optical recording medium according to a third embodiment of the present invention in its unclamped and its clamped state;
- Figs. 10a and 10b: show a cross-sectional view of the optical recording medium according to a fourth embodiment of the present invention in its unclamped and its clamped state;
- Fig. 11a: shows a partial cross-sectional view of a known CD with a laser beam focused on the recording layer;
- Fig. 11b: shows a partial cross-sectional view of a known DVD with a laser beam focused on the recording layer;
- Fig. 11c: shows a partial cross-sectional view of an optical recording medium according to the first embodiment of the present invention with a laser beam focused on the recording layer;
- Fig. 12: is a schematic drawing of a laser focusing mechanism and a photo diode for reading an optical recording medium; and
- Fig. 13: shows a partial view of a clamping mechanism of a disc drive.

### Detailed description of the invention:

For a full understanding of the invention, the physical formats of DVDs and CDs according to the state of the art are discussed in the following. **Fig. 1** shows a partial cross-sectional view of a known DVD-5. A DVD-5 comprises an information disc (bottom disc) **1** and a blank or dummy disc (top disc) **2** both made of polycarbonate and bonded together by a resin layer **4.** The upper surface of the information disc is structured and carries a recording layer **3** made of aluminum. The recording layer **3** forms so-called pits and lands which correspond to the data stream stored on the DVD-5 (the total storage capacity of a DVD-5 is 4.7 GB). The total thickness of a DVD-5 is about 1.2 mm, wherein the thickness of the information disc **1** has a thickness of about 0.6 mm so that the recording layer **3** is positioned with a distance of about 0.6 mm from the outer surface of the information disc **1.** For reading the data stream stored on the DVD-5, a laser beam **5** is focused on the recording layer **3.**

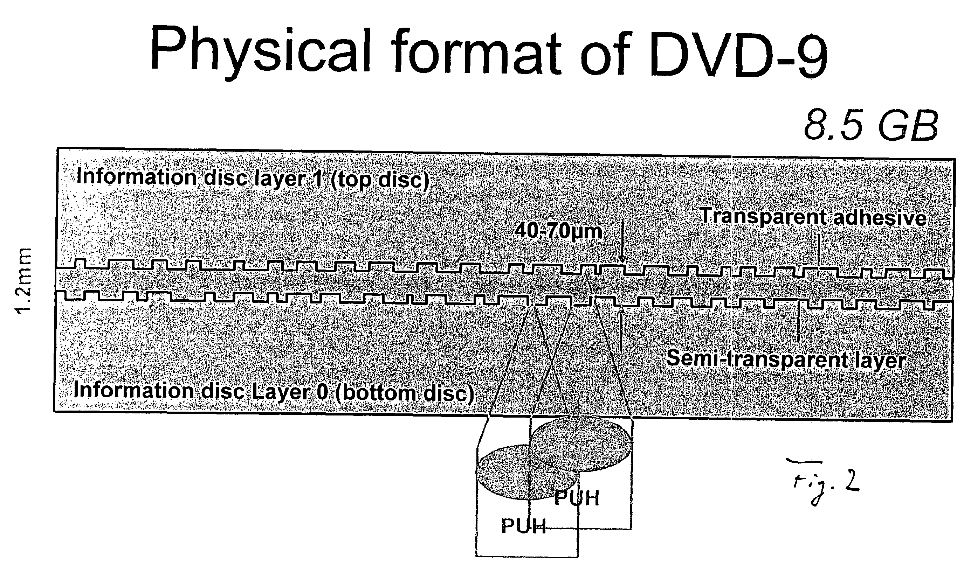

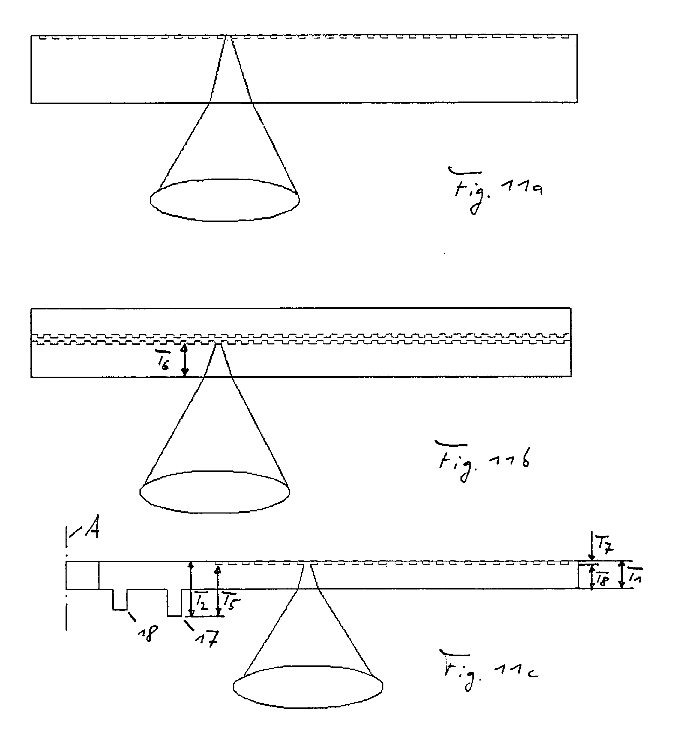

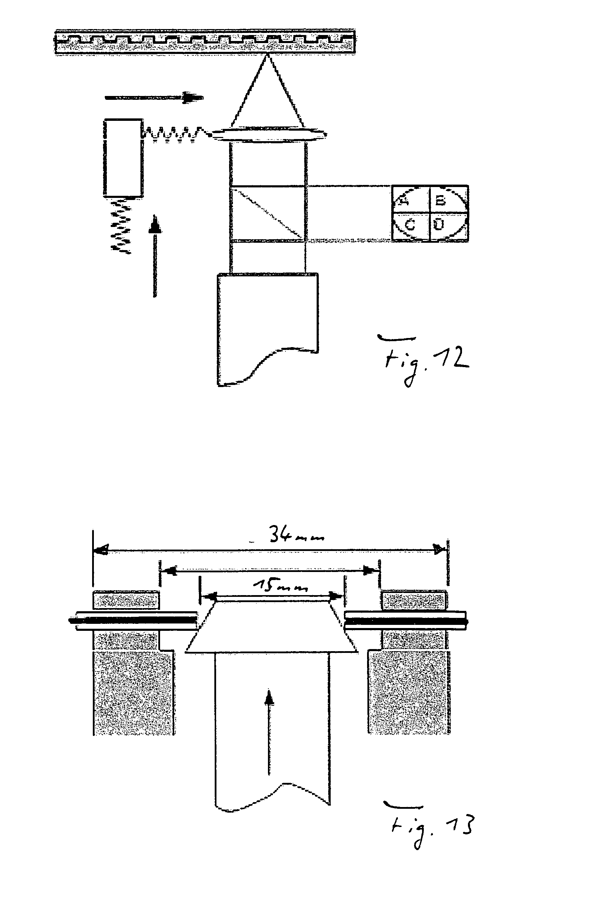

**Fig. 2** shows a partial cross-sectional view of a known DVD-9 having a total storage capacity of 8.5 GB and a total thickness of also 1.2 mm. A DVD-9 has two information discs **1** and **1'** with two recording layers **3** and **3'.** The first (lower) recording layer **3'** is semi-transparent so that the laser beam can alternatively be focused on the first (lower) or the second (upper) recording layer from the bottom side. For this purpose, a transparent adhesive is used for bonding the information discs together. Further, the laser beam system or the convection lens system of the laser is adjustable so that the focus of the laser beam is located on the desired recording layer. A schematic drawing of such a focusing mechanism **6** for a laser **7** is shown in **Fig. 12.** The laser beam is reflected by the recording layer and is then directed by a semi-permeable mirror to a photo diode **8.**

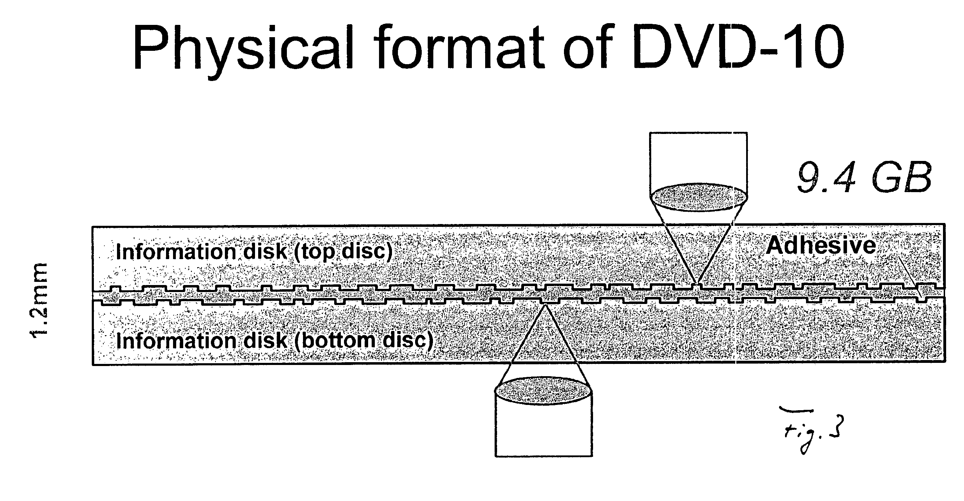

**Fig. 3** shows a partial cross-sectional view of a known DVD-10 having a total storage capacity of 9.4 GB and a total thickness of also 1.2 mm. The physical format is similar to a DVD-9. However, the -(second) upper recording layer **3'** is read by a second laser beam 5' which is arranged on the side of the second (upper) information disc (opposed to the first laser beam **5**).

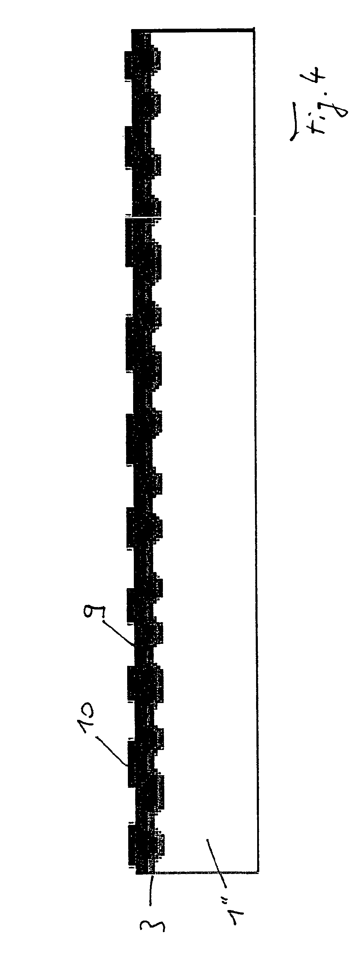

Finally, **Fig. 4** shows a partial cross-sectional view of a known CD which only comprises one disc **1"** made of polycarbonate. The recording layer **3** is only covered by a protective lacquer **9** which usually carries a printed layer **10.** The total thickness of a CD is again about 1.2 mm. However, the recording layer is not positioned in the center of the recording medium (between two discs), but at the top the recording medium. Therefore, the distance from the lower surface of the disc 1" to the recording layer 3 is about 1.0 mm to about 1.15 mm. Since the CD is identically positioned within the drive like a DVD (in case of a combinational drive which is suitable for DVDs and CDs), the focusing mechanism **6** must be suitable to focus the laser beam to the height of the recording layer of the CD which is higher than the recording layer(s) of a DVD.

In this context, it has to be noted that a laser for reading a DVD has a wavelength of about 650 nm, and a laser for reading a CD has a wavelength of about 780 nm. Therefore, a combinational drive which is suitable for DVDs and CDs needs to have two lasers for providing these two wavelengths. The reason why different wavelengths are necessary is that the height difference between pits and lands of the recording layer are different for DVDs and for CDs. This height difference must be about λ/4, i.e. 650nm/4 (+/- 4%) for a DVD, and 780nm/4 (+/- 4%) for a CD. In addition, the pit and land structure of a DVD is significantly smaller compared to a CD, as can be seen in **Figs. 5 and 6** which show microscope pictures of a recording layer of a CD and of a DVD, respectively.

**Fig. 7** shows a (schematic) cross-sectional view of an optical recording medium according to a first embodiment of the present invention. The optical recording medium comprises an information disc or a substrate **12** and a recording layer **13** arranged on one side of the substrate **12,** wherein the optical recording medium has a predetermined clamping area **14.** The recording layer **13** is covered by a lacquer layer **13'.**

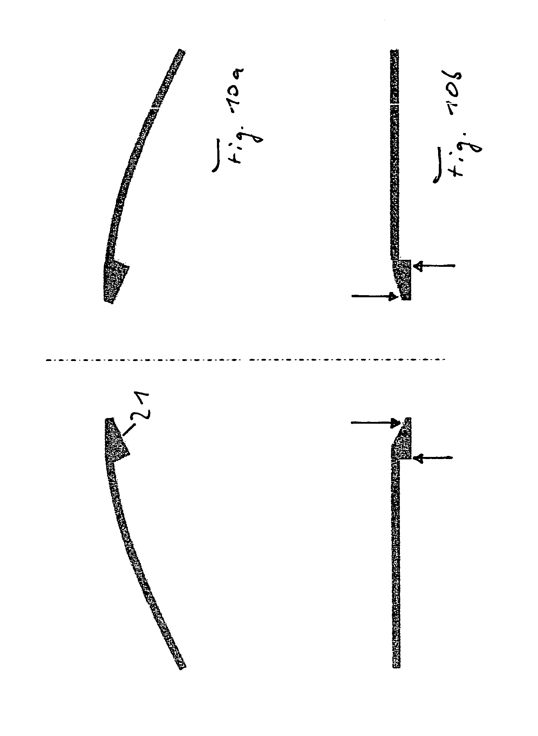

When the inventive optical recording is clamped in a drive, the recording layer has a different height compared to recording layers of known DVDs. As stated before, the recording layer(s) of a DVD according to the state of the art is/are arranged in its center (see also **Fig. 11b** showing a partial cross-sectional view of a known DVD with a laser beam focused on the recording layer). Contrary to that, the recording layer of a CD according to the state of the art is arranged at the top (see also **Fig. 11a** showing a partial cross-sectional view of a known DVD with a laser beam focused on the recording layer). According to the present invention, the DVD has a layer structure of a CD, i.e. the recording layer is arranged at the top of a DVD according to the present invention as shown in **Fig. 11c**. Such a layer arrangement is not known in the prior art, because laser beam of DVD drives is focused to a distance of **T₆** (of about 0.6 mm) with respect to the lower surface of the disc, wherein the position of this lower surface is defined by the clamping mechanism. However, in case of the situation as shown in **Fig. 11c**, the distance **T₅** of the lowest part of the disc to the recording layer is significantly greater than **T₆,** namely between 1.0 mm and 1.2 mm, in particular about 1.1 mm. Many commercially available drives which are only suitable for reading DVDs have no height adjustment mechanism as shown in **Fig. 12.** Therefore, a DVD shown in Fig. 11c can not be read with such DVD drives, because the recording layer is at a height of about 1.1 mm (and not 0.6 mm).

Nevertheless, the inventive DVD shown in **Fig. 11c** can be read with a drive which is suitable for reading DVDs and CDs, because such drives have a height adjustment mechanism as shown in **Fig. 12.** As a result, the inventive DVD of **Fig. 11c** has a recording layer positioned at a height as the recording layer of a CD, and can only be read with a drive with a 650 nm laser which is or can be focused on this recording layer.

Besides the layer structure of the inventive optical recording medium, it is further advantageous for all embodiments of the present invention to provide the inventive optical recording medium with the following mechanical aspects:
Referring again to Fig. 7, the clamping area **14** is formed such as to achieve a deformation of or a tension in at least a part of the optical recording medium **11** when it is clamped within a recording and/or reproducing device. In particular, the deformation or tension is present in an area or in the entire area of the optical recording medium which is located outside of the clamping area **14.** The deformation or tension preferably results in a change of the relative position of the outer edges **15** of the optical recording medium with respect to the clamping area. As a result, the optical recording medium may have a thinner thickness in the area of the recording layer (outside of the clamping area) of - for example - only about 0.6 mm or even less. In particular, the thickness **T₁** of the optical recording medium in an area outside of the clamping area is in the range between 0.4 to 0.7 mm. However, it is to be understood that the invention is not limited to a specific thickness of the optical recording medium. Also a total thickness **T₂** of the optical recording medium in the outer section of the clamping area **14** of about 1.2 mm is possible.

Trials in the prior art with optical recording discs having a reduced thickness in the area of the recording layer compared to common DVDs or CDs (having a thickness of about 1.2 mm) were not successful, because of the reduced stiffness and/or reduced shape stability of the discs. Therefore, the reliability of such disc was not satisfying (i.e. the discs could not be played on all types of players available on the market). However, with the optical recording medium according to the present invention, this drawback is significantly reduced or even completely avoided, because the stiffness is increased in the clamped state of the optical recording medium due to the deformation of or the tension in the medium. Thus, the inventive optical recording medium compensates the reduced stiffness of the thin recording medium by means of the deformation/tension. In the same manner, a thin sheet of paper which has a very low shape stability per se, may gain a significant stability if a tension is applied or if a deformation is applied (e.g. in the hand of a lecturer).

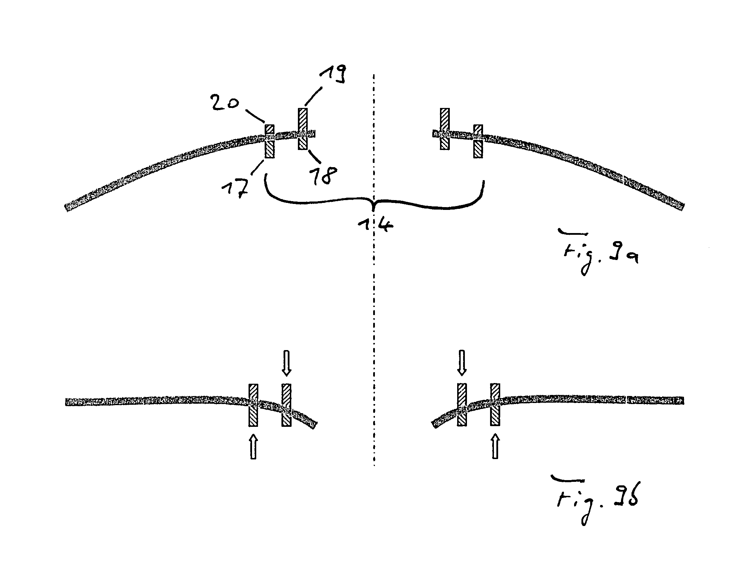

**Figs. 8a and 8b** show a cross-sectional view of the optical recording medium according to a second embodiment of the present invention in its unclamped and its clamped state. According to this embodiment of the invention, the optical recording medium is a disk having the general shape of a cone or of an umbrella **16** when the optical recording medium is in an unclamped state, with an small angle **α** between a surface of the optical recording medium and a plane which is perpendicular to the axis **A** of the optical recording medium. The angle **α** is preferably greater than 0.5°, in particular in the range between 0.8° and 3°, when the disc is in an unclamped state (i.e., the schematic drawings in **Figs 8a and 8b** are exaggerating the angle dimension). In case of an umbrella shape (as shown), the mentioned angles are maximum angles which occur at the outer edges **15** of the disc. In the clamped stated of the disk, the angle **α** is reduced. A similar effect is given with the wings of a jumbo jet which are lifted when the jet is flying.

With this preferred embodiment of the invention, the deformation of or tension in the optical recording medium preferably results in that the optical recording medium adopts a generally flat shape, in particular if the optical recording medium is clamped in the clamping area by a force of 0.3 to 5 N, in particular by a force of 0.5 to 2.5 N.

From a structural point of view, the above effects can be achieved - as shown in **Figs. 7, 8a and 8b -** by an optical recording medium which having a first ring **17** on a first side of the optical recording medium which extends at least in the outer section of the clamping area **14** of the optical recording medium. According to the present DVD/CD standard, the clamping area is defined by an area located within a radius of about 16 or 17 mm with respect to the axis of the optical recording medium (the diameter of the clamping area is less than about 34 mm, in particular less than about 28 mm). A typical clamping mechanism is - for example - shown in **Fig. 13.** Alternatively, the optical recording medium comprises one or more first protrusions on a first side of the optical recording medium located in the outer section of the clamping area **14** of the optical recording medium.

In order to limit the maximum deformation/tension in the disc, it is preferred to provide a second ring **18** on the first side of the optical recording medium which extends at least in the inner section of the clamping area **14** of the optical recording medium. Alternatively, the optical recording medium comprises one or more second protrusions on the first side of the optical recording medium located in the inner section of the clamping area **14** of the optical recording medium.

The first ring **17** has a thickness **T₃** which is slightly greater than the thickness **T₄** of the second ring **18.** When both rings are pressed down to a flat surface of a clamping means, the (outer) first ring touches the surface first, and then - by increasing the clamping force - the (inner) second ring also touches the surface so that the inner edge of the optical recording medium is deformed downwardly with respect to the area at the (outer) first ring **17.** This situation is shown in **Fig. 8b.** At the same time, the outer edges of the optical recording medium are lifted, because the (outer) first ring **17** acts like a jacking/bearing area. As a result, the conical/umbrella shape **16** of the optical recording medium may achieve an almost flat shape in its outer area (in particular in the area of the recording layer) with high shape stability.

**Figs. 9a and 9b** show a cross-sectional view of the optical recording medium according to a third embodiment of the present invention in its unclamped and its clamped state. The optical recording medium according to this embodiment has a third ring **19** on a second side of the optical recording medium which extends at least in the inner section of the clamping area **14** of the optical recording medium, as well as a fourth ring **20** on the second side of the optical recording medium which extends at least in the outer section of the clamping area **14** of the optical recording medium. Again, instead of the third ring and the fourth ring, third and fourth protrusions may be provided for achieving the same effect.

**Figs. 10a and 10b** show a cross-sectional view of the optical recording medium according to a fourth embodiment of the present invention in its unclamped and its clamped state. In this embodiment, the jacking/bearing effect is achieved with a clamping area **14** having a conically shaped surface **21** on a first side of the optical recording medium such that the total thickness of the optical recording medium reduces from the outer section of the clamping area **14** to the inner section of the clamping area **14.**

## Claims

1. Optical recording medium having a first surface and a second surface, the optical recording medium comprising:
a substrate (12) and at least one recording layer (13) for storing data, wherein the structure of the recording layer (13) is formed such that the data can be read using a light having a wavelength of 650 nm ± 50 nm,
**characterized in that**
the recording layer (13) is at least partially positioned at a distance (T₇) of less than 0.4 mm with respect to the second surface.

2. Optical recording medium having a first surface and a second surface, the optical recording medium comprising:
a substrate (12) and at least one recording layer (13) for storing data, wherein the structure of the recording layer (13) has pits and lands with a height difference of 650nm / 4 ± 10%,
**characterized in that**
the recording layer (13) is at least partially positioned at a distance (T₇) of less than 0.4 mm with respect to the second surface.

3. Optical recording medium according to claim 1 or 2, **characterized in that** the recording layer (13) is entirely positioned at a distance (T₇) of less than 0.4 mm with respect to the second surface.

4. Optical recording medium according to one of the preceding claims, **characterized in that** the recording layer (13) is positioned at a distance (T₇) of less than 0.3 mm with respect to the second surface.

5. Optical recording medium according to one of the preceding claims, **characterized in that** the recording layer (13) is at least partially positioned at a distance (T₅) of more than 0.9 mm from a plane defined by a surface of a clamping area of the optical recording medium.

6. Optical recording medium according to claim 5, **characterized in that** the optical recording medium has an increased thickness (T₂) at the clamping area compared to the distance (T₁) between the first surface and the second surface.

7. Optical recording medium according to one of the preceding claims, **characterized in that** the recording layer (13) is at least partially positioned at a distance (T₈) of more than 0.4 mm from the first surface.

8. Optical recording medium having a first surface and a second surface, the optical recording medium comprising:
a substrate (12) and at least one recording layer (13) for storing data, wherein the structure of the recording layer (13) is formed such that the data can be read using a light having a wavelength of 650 nm ± 50 nm,
**characterized in that**
the recording layer (13) is at least partially positioned at a distance (T₅) of more than 0.9 mm from a plane defined by a surface of a clamping area of the optical recording medium.

9. Optical recording medium having a first surface and a second surface, the optical recording medium comprising:
a substrate (12) and at least one recording layer (13) for storing data, wherein the structure of the recording layer (13) has pits and lands with a height difference of 650nm / 4 ± 10%,
**characterized in that**
the recording layer (13) is at least partially positioned at a distance (T₅) of more than 0.9 mm from a plane defined by a surface of a clamping area of the optical recording medium.

10. Optical recording medium according to claim 8 or 9, **characterized in that** the plane defined by a surface of the clamping area is perpendicular to an axis (A) of the optical recording medium.

11. Optical recording medium according to one of claims 8 to 10, **characterized in that** said surface of the clamping area is on the side of the first surface of the optical recording medium.

12. Optical recording medium according to one of claims 8 to 11, **characterized in that** the clamping area defines the maximum thickness (T₂) of the optical recording medium.

13. Optical recording medium having a first surface and a second surface, the optical recording medium comprising:
a substrate (12) and at least one recording layer (13) for storing data, wherein the structure of the recording layer (13) is formed such that the data can be read using a light having a wavelength of 650 nm ± 50 nm,
**characterized in that**
the optical recording medium has a clamping area with a thickness (T₂) which is greater than the distance (T₁) between the first surface and the second surface,
and **in that** the recording layer (13) is at least partially positioned at a distance (T₈) of more than 0.4 mm from the first surface.

14. Optical recording medium having a first surface and a second surface, the optical recording medium comprising:
a substrate (12) and at least one recording layer (13) for storing data, wherein the structure of the recording layer (13) has pits and lands with a height difference of 650nm / 4 ± 10%,
**characterized in that**
the optical recording medium has a clamping area with a thickness (T₂) which is greater than the distance (T₁) between the first surface and the Second surface,
and **in that** the recording layer (13) is at least partially positioned at a distance (T₈) of more than 0.4 mm from the first surface.

15. Optical recording medium according to one of the preceding claims, **characterized in that** the clamping area (14) is formed such as to achieve a deformation of or a tension in at least a part of the optical recording medium when it is clamped within a recording and/or reproducing device.

16. Optical recording medium according to claim 15, **characterized in that** the deformation or tension is present in an area of the optical recording medium which is located outside of the clamping area (14).

17. Optical recording medium according to claim 15 or 16, **characterized in that** the deformation or tension is present in the entire area of the optical recording medium which is located outside of the clamping area (14).

18. Optical recording medium according to one of claims 15 to 17, **characterized in that** the deformation or tension results in a change of the relative position of the outer edges (15) of the optical recording medium with respect to the clamping area.

19. Optical recording medium according to one of the preceding claims, **characterized in that** the optical recording medium is a disk having the general shape of a cone or of an umbrella (16) when the optical recording medium is in an unclamped state, with an angle (α) between a surface of the optical recording medium and a plane which is perpendicular to the axis (A) of the optical recording medium.

20. Optical recording medium according to claim 19, **characterized in that** the angle (α) is reduced when the disk in a clamped state.

21. Optical recording medium according to claim 19 or 20, **characterized in that** the angle (α) is greater than 0.5°, in particular in the range between 0.8° and 3°, when the optical recording medium is in an unclamped state.

22. Optical recording medium according to one of claims 15 to 21, **characterized in that** the deformation of or tension in the optical recording medium when the optical recording medium is in a clamped state results **in that** the optical recording medium adopts a generally flat shape.

23. Optical recording medium according to claim 22, **characterized in that** the optical recording medium adopts the generally flat shape if the optical recording medium is clamped in the clamping area by a force of 0,3 to 5 N, in particular by a force of 0,5 to 2,5 N.

24. Optical recording medium according to one of the preceding claims, **characterized in that** the optical recording medium comprises a first ring (17) on a first side of the optical recording medium which extends at least in the outer section of the clamping area (14) of the optical recording medium.

25. Optical recording medium according to one of the preceding claims, **characterized in that** the optical recording medium comprises one or more first protrusions on a first side of the optical recording medium located in the outer section of the clamping area (14) of the optical recording medium.

26. Optical recording medium according to claim 24 or 25, **characterized in that** the optical recording medium comprises a second ring (18) on the first side of the optical recording medium which extends at least in the inner section of the clamping area (14) of the optical recording medium.

27. Optical recording medium according to claim 24 or 25, **characterized in that** the optical recording medium comprises one or more second protrusions on the first side of the optical recording medium located in the inner section of the clamping area (14) of the optical recording medium.

28. Optical recording medium according to one of claims 24 to 27, **characterized in that** the first ring (17) has or the first protrusions have a thickness (T₃) which is equal or slightly greater than the thickness (T₄) of the second ring (18) or of the second protrusions, respectively.

29. Optical recording medium according to one of claims 24 to 28, **characterized in that** the optical recording medium comprises a third ring (19) on a second side of the optical recording medium which extends at least in the inner section of the clamping area (14) of the optical recording medium.

30. Optical recording medium according to one of claims 24 to 28, **characterized in that** the optical recording medium comprises one or more third protrusions on a second side of the optical recording medium located in the inner section of the clamping area (14) of the optical recording medium.

31. Optical recording medium according to one of claims 24 to 30, **characterized in that** the optical recording medium comprises a fourth ring (20) on the second side of the optical recording medium which extends at least in the outer section of the clamping area (14) of the optical recording medium.

32. Optical recording medium according to one of claims 24 to 30, **characterized in that** the optical recording medium comprises one or more fourth protrusions on the second side of the optical recording medium located in the outer section of the clamping area (14) of the optical recording medium.

33. Optical recording medium according to one of claims 24 to 32, **characterized in that** the first ring (7) has or the first protrusions have a thickness (T₃) which is equal or slightly greater than the thickness (T₄) of the second ring (18) or of the second protrusions, respectively.

34. Optical recording medium according to one of claims 1 to 23, **characterized in that** the clamping area (14) has a conically shaped surface on a first side of the optical recording medium such that the total thickness of the optical recording medium reduces from the outer section of the clamping area (14) to the inner section of the clamping area (14).

35. Optical recording medium according to one of the preceding claims, **characterized in that** the total thickness (T₂) of the optical recording medium in the outer section of the clamping area (14) is about 1.2 mm.

36. Optical recording medium according to one of the preceding claims, **characterized in that** the thickness (T₁) of the optical recording medium in an area outside of the clamping area is in the range between 0.4 to 0.7 mm.

37. Optical recording medium according to one of the preceding claims, **characterized in that** the distance (T₁) between the first surface and the second surface is in the range between 0.4 to 0.7 mm.

38. Optical recording medium according to one of the preceding claims, **characterized in that** the claming area is defined by an area located within a radius of about 16 or 17 mm with respect to the axis of the optical recording medium.

39. Optical recording medium according to one of the preceding claims, **characterized in that** the optical recording medium is a disc having an outer diameter of about 65 mm.

40. Optical recording medium according to one of the preceding claims, **characterized in that** the optical recording medium is a disc having an outer diameter of about 120 mm.

41. Optical recording medium according to one of the preceding claims, **characterized in that** the optical recording medium is designed to be read with a laser which is positioned on the side of the first surface of the optical recording medium.

42. Optical recording medium according to one of the preceding claims, **characterized in that** the optical recording medium has only one substrate.

43. Optical recording medium according to one of the preceding claims, **characterized in that** the recording layer is covered by a lacquer layer and/or a printing layer on the side of the second surface.

44. System comprising a drive for reading an optical recording medium, and a clamping mechanism for clamping an optical recording medium, wherein the clamping mechanism has a defined a clamping area,
**characterized by** an optical recording medium according to one of the preceding claims.

45. System according to claim 44, **characterized by** a height adjustment mechanism for a laser device or for a lens system of a laser device.

46. System according to claim 44 or 45, **characterized by** a laser device which is suitable to emit a laser light having a wavelength of about 650 nm.
